# EUROPEAN PATENT APPLICATION

(11) **EP 4 262 214 A1**
(43) Date of publication of application: **18.10.2023**
(21) Application number: 22823942.2
(22) Date of filing: 07.05.2022
(51) Int. Cl.: H04N 21/239

(54) **SCREEN PROJECTION METHOD AND APPARATUS, AND ELECTRONIC DEVICE AND STORAGE MEDIUM**

(30) Priority: 16.06.2021 CN 202110666267
(71) Applicant: BEIJING BYTEDANCE NETWORK TECHNOLOGY CO., LTD., Beijing 100041 (CN)
(72) Inventor: ZHANG, Jieting, Beijing 100086 (CN); SHEN, Xianchao, Beijing 100086 (CN); YU, Zhenhua, Beijing 100086 (CN)
(74) Representative: Dentons UK and Middle East LLP
(86) International application number: PCT/CN2022/091366
(87) International publication number: WO 2022/262459

(57) **Abstract**

Provided are a screen projecting method and apparatus, an electronic device and a storage medium. The screen projecting method includes: receiving a screen projecting request from a terminal device, wherein the screen projecting request carries target screen projecting identification information, and the target screen projecting identification information includes target image information and/or target video information; determining, according to the target screen projecting identification information, a projection device to which screen projecting is requested by the terminal device; and establishing a screen projecting connection between the terminal device and the projection device.

## Description

This application claims priority to Chinese Patent Application No. 202110666267.4 filed with the China National Intellectual Property Administration (CNIPA) on Jun. 16, 2021, the disclosure of which is incorporated herein by reference in its entirety.

### TECHNICAL FIELD

The present disclosure relates to the field of computer technology, for example, a screen projecting method and apparatus, an electronic device and a storage medium.

### BACKGROUND

In the related art, wide area network-based screen projecting is generally performed based on a personal identification number (PIN) or a two-dimensional code. However, a screen projecting manner in the related art is relatively simple and has relatively low security and thus cannot satisfy screen projecting requirements of users.

### SUMMARY

The present disclosure provides a screen projecting method and apparatus, an electronic device and a storage medium, so as to provide a user with richer screen projecting manners and improve the security of screen projecting.

The present disclosure provides a screen projecting method. The method includes the steps below.

A screen projecting request is received from a terminal device, where the screen projecting request carries target screen projecting identification information, and the target screen projecting identification information includes target image information and/or target video information.

A projection device to which screen projecting is requested by the terminal device is determined according to the target screen projecting identification information.

A screen projecting connection is established between the terminal device and the projection device.

The present disclosure further provides another screen projecting method. The method includes the steps below.

A projection device displays a screen projecting identifier of the projection device, where the screen projecting identifier includes an identification image and/or an identification video.

A terminal device acquires target screen projecting identification information corresponding to the screen projecting identifier, generates a screen projecting request carrying the target screen projecting identification information, and sends the screen projecting request to a server.

The server receives the screen projecting request, determines, according to the target screen projecting identification information, the projection device to which screen projecting is requested by the terminal device, and establishes a screen projecting connection between the terminal device and the projection device.

The present disclosure further provides a screen projecting apparatus. The apparatus includes a request receiving module, a device determination module and a connection establishing module.

The request receiving module is configured to receive a screen projecting request from a terminal device, where the screen projecting request carries target screen projecting identification information, and the target screen projecting identification information includes target image information and/or target video information.

The device determination module is configured to determine, according to the target screen projecting identification information, a projection device to which screen projecting is requested by the terminal device.

The connection establishing module is configured to establish a screen projecting connection between the terminal device and the projection device.

The present disclosure further provides an electronic device.

The electronic device includes one or more processors and a memory configured to store one or more programs.

When executed by the one or more processors, the one or more programs cause the one or more processors to perform the screen projecting method described above.

The present disclosure further provides a computer-readable storage medium. The storage medium stores a computer program which, when executed by a processor, causes the processor to perform the screen projecting method described above.

### BRIEF DESCRIPTION OF DRAWINGS

FIG. 1 is a flowchart of a screen projecting method according to an embodiment of the present disclosure;
FIG. 2 is a flowchart of another screen projecting method according to an embodiment of the present disclosure;
FIG. 3 is a flowchart of another screen projecting method according to an embodiment of the present disclosure;
FIG. 4 is a block diagram of a screen projecting apparatus according to an embodiment of the present disclosure; and
FIG. 5 is a structure diagram of an electronic device according to an embodiment of the present disclosure.

### DETAILED DESCRIPTION

Embodiments of the present disclosure are described hereinafter with reference to the drawings. The drawings illustrate some embodiments of the present disclosure, but the present disclosure may be implemented in various manners. These embodiments are provided for ease of understanding of the present disclosure. The drawings and embodiments of the present disclosure are illustrative.

Steps described in method embodiments of the present disclosure may be performed in sequence and/or in parallel. Additionally, the method embodiments may include additional steps and/or omit some of the illustrated steps. The scope of the present disclosure is not limited in this respect.

The term "include" and variations thereof used herein refer to "including, but not limited to". The term "based on" refers to "at least partially based on". The term "an embodiment" refers to "at least one embodiment". The term "another embodiment" refers to "at least one other embodiment". The term "some embodiments" refers to "at least some embodiments". Definitions of other terms are given in the description hereinafter.

Concepts such as "first" and "second" in the present disclosure are used to distinguish between apparatuses, between modules or between units and are not intended to limit the order or mutual dependence of the functions performed by these apparatuses, modules or units.

"One" and "multiple" mentioned in the present disclosure are not limiting but illustrative. It is to be understood by those skilled in the art that "one" and "multiple" are construed as "one or more" unless otherwise specified in the context.

The names of messages or information exchanged between apparatuses in embodiments of the present disclosure are illustrative and not to limit the scope of the messages or information.

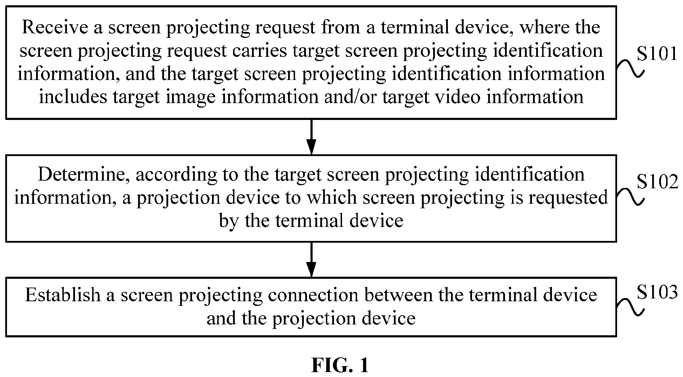

FIG. 1 is a flowchart of a screen projecting method according to an embodiment of the present disclosure. The method may be performed by a screen projecting apparatus. The apparatus may be implemented by software and/or hardware and may be configured in an electronic device such as a computer device (for example, a server). The screen projecting method provided in the embodiment of the present disclosure is applicable to the scenario of wide area network-based screen projecting. As shown in FIG. 1, the screen projecting method provided in this embodiment may include the steps below.

In S101, a screen projecting request is received from a terminal device, where the screen projecting request carries target screen projecting identification information, and the target screen projecting identification information includes target image information and/or target video information.

The screen projecting request may be understood as a request for screen projecting to other device. Accordingly, the terminal device may be a device having a screen projecting requirement. The terminal device may be a mobile phone, a tablet computer or a personal computer and may establish a connection with the server through WebSocket or the Hyper Text Transfer Protocol over SecureSocket Layer (HTTPS).

The target screen projecting identification information may be understood as screen projecting identification information of the other device, that is, screen projecting identification information of a device to which the screen projecting is requested by the terminal device. Screen projecting identification information of a device may be understood as identification information of the device for another device to perform the screen projecting and may be used for uniquely identifying the device. The target screen projecting identification information may include the target image information and/or the target video information. The target image information may be understood as information about an image as an identifier, and the target video information may be understood as information about a video as an identifier. Accordingly, an image and/or a video may be used as a screen projecting identifier of a device.

When desiring to perform the screen projecting to the other device, the terminal device may acquire the target screen projecting identification information of the other device to which the terminal device desires to perform the screen projecting, generate the screen projecting request carrying the target screen projecting identification information, and send the screen projecting request to the server. Accordingly, when receiving the screen projecting request from the terminal device, the server may parse the screen projecting request to obtain the target screen projecting identification information carried in the screen projecting request.

In this embodiment, screen projecting identification information of a device may be generated by the server and sent to the device, may be generated by the device according to a preset generation rule and sent to the server, or may be generated by an identification generation apparatus (such as another device or server) other than the device and the server and sent to the device and the server, which is not limited in this embodiment.

To improve the security of the generated screen projecting identification information and lower a requirement on the performance of the terminal device, the screen projecting identification information may be generated by the server in this embodiment. In this case, before the screen projecting request is received from the terminal device, the method may further include: in the case where an identification information acquisition request is received from the projection device, determining screen projecting identification information of the projection device, and sending the screen projecting identification information to the projection device for display so that the terminal device acquires the screen projecting identification information.

The identification information acquisition request may be a request of the projection device for acquiring the screen projecting identification information of the projection device and may be generated when a trigger operation for displaying a screen projecting identifier is received.

In the preceding embodiment, the projection device may establish a long connection with the server, for example, through the WebSocket. For example, when a user desires to perform the screen projecting to the projection device through the terminal device, the user performs the trigger operation for instructing the projection device to display the screen projecting identifier of the projection device. When receiving the trigger operation, the projection device generates the identification information acquisition request and sends the identification information acquisition request to the server. Alternatively, the projection device determines whether the screen projecting identification information of the projection device is stored locally. If the screen projecting identification information of the projection device is stored locally, the projection device displays the screen projecting identifier of the projection device according to the screen projecting identification information. If the screen projecting identification information of the projection device is not stored locally, the projection device generates the identification information acquisition request and sends the identification information acquisition request to the server. Accordingly, when receiving the identification information acquisition request from the projection device, the server may determine the screen projecting identification information of the projection device. For example, the server generates the screen projecting identifier of the projection device and determines the screen projecting identification information of the screen projecting identifier. Alternatively, the server acquires the screen projecting identification information of the projection device stored locally and sends the screen projecting identification information to the projection device. Therefore, when receiving the screen projecting identification information from the server, the projection device may display the screen projecting identifier of the projection device according to the screen projecting identification information and store the screen projecting identification information. Accordingly, the terminal device may collect the screen projecting identification information of the screen projecting identifier displayed by the projection device, generate a screen projecting request carrying the screen projecting identification information, and send the screen projecting request to the server, so as to request the server to establish a screen projecting connection between the terminal device and the projection device.

In this embodiment, a validity period may be set for screen projecting identification information of each device, so as to reduce the possibility that the screen projecting identification information is illegally stolen and improve the security of screen projecting. For example, when receiving the trigger operation for displaying the screen projecting identifier, the projection device may generate the identification information acquisition request and send the identification information acquisition request to the server. Alternatively, the projection device determines whether valid screen proj ecting identification information (within a validity period) of the projection device is stored locally. If the valid screen projecting identification information of the projection device is stored locally, the projection device displays the screen projecting identifier of the projection device according to the screen projecting identification information. If the screen projecting identification information of the projection device stored locally is invalid (beyond the validity period), the projection device deletes the screen projecting identification information stored locally, generates the identification information acquisition request, and sends the identification information acquisition request to the server. Accordingly, when receiving the identification information acquisition request from the projection device, the server may determine the screen projecting identification information of the projection device. For example, the server determines whether the valid screen projecting identification information of the projection device is stored locally. If the valid screen projecting identification information of the projection device is stored locally, the server sends the screen projecting identification information (or a combination of the screen projecting identification information and the validity period of the screen projecting identification information) to the projection device. If the screen projecting identification information of the projection device stored locally is invalid, the server may delete the screen projecting identification information of the projection device stored locally, generate the screen projecting identifier according to a preset screen projecting information generation rule, store the screen projecting identification information of the projection device and the validity period thereof, and send the screen projecting identification information (or the combination of the screen projecting identification information and the validity period of the screen projecting identification information) to the projection device.

The validity period of the screen projecting identification information may be flexibly set, for example, may be set to 5 h, 12 h or 24 h. The screen projecting identifier may be generated by a generation method. For example, a random function may be set for randomly generating different images (including pictures and/or animated images). For example, function pictures may be generated by a MATLAB tool which calls a drawing interface and sets a parameter of the interface to a random parameter to randomly draw pictures. Alternatively, when enough pictures are stored in the server, the pictures stored in the server are processed (for example, a watermark, a password or a PIN code is added) so that pictures are generated and used as identification pictures of the projection device. Alternatively, after pictures are generated, multiple pictures generated are used for generating an animated image as an identification animation image of the projection device. Additionally/altematively, a special effect (such as a transition effect or a motion effect) is added to one or more pictures generated so that a video is generated. Alternatively, a video stored in the server is randomly intercepted or selected, and video frames in the video are processed (for example, a watermark, a password or a PIN code is added) so that a video is generated and used as an identification video of the projection device. The generation method is not limited in this embodiment.

In S102, a projection device to which the screen projecting is requested by the terminal device is determined according to the target screen projecting identification information.

The projection device may be understood as a device corresponding to the target screen projecting identification information, that is, a device to which the screen projecting is requested by the terminal device sending the screen projecting request. The projection device may be a device capable of being configured for the screen projecting, such as a television, a smart tablet or a computer.

For example, after receiving the screen projecting request from the terminal device, the server may match the target screen projecting identification information carried in the screen projecting request with screen projecting identification information of each device stored in the server, that is, match a target screen projecting identifier corresponding to the target screen projecting identification information with a screen projecting identifier of each device stored in the server. If screen projecting identification information/a screen projecting identifier of a device is successfully matched, the device corresponding to the screen projecting identification information/screen projecting identifier successfully matched is determined to be the projection device to which the screen projecting is requested by the terminal device. Accordingly, if the target screen projecting identification information/target screen projecting identifier fails to match all the screen projecting identification information/screen projecting identifiers stored in the server, prompt information may be sent to the terminal device to prompt the user through the terminal device that the projection device corresponding to the target screen projecting identification information does not exist.

In S103, a screen projecting connection is established between the terminal device and the projection device.

In this embodiment, after determining the projection device corresponding to the target screen projecting identification information carried in the screen projecting request, the server may establish the screen projecting connection between the terminal device sending the screen projecting request and the projection device so that the terminal device sends screen projecting data to the projection device through the screen projecting connection for the projection device to perform the screen projecting.

In an embodiment, after the screen projecting connection is established between the terminal device and the projection device, the method further includes: acquiring the screen projecting data of the terminal device, and sending the screen projecting data to the projection device for display.

The screen projecting data of the terminal device may be content to be projected by the terminal to the projection device, which may be video data of a video (such as a television program, a television series, a movie or another video) to be projected by the terminal device or page data of a display page of the terminal device. Accordingly, the server may acquire the screen projecting data of the terminal device from a resource database of video resources storing the corresponding video or from the terminal device.

In the preceding embodiment, a manner of the screen projecting performed by the terminal device to the projection device may be set as required. For example, the terminal device may projection to-be-played content (such as a video) or the display page of the terminal device to the projection device.

For example, when the screen projecting data is video content, the terminal device may determine a to-be-projected video based on a screen projecting operation of the user and send identification information (such as a video identifier (ID) or a resource storage address) of the video to the server. Accordingly, the server may acquire video data of the video from the resource database according to the identification information, use the video data as the screen projecting data, and send the screen projecting data to the projection device. Therefore, after receiving the screen projecting data from the server, the projection device may display the screen projecting data, that is, play the video corresponding to the screen projecting data.

When the screen projecting data is the display page, the terminal device may send page data of a current display page (including content displayed in the page) as the screen projecting data to the server in real time or when detecting that a page displayed by the terminal device or content in the page changes. Accordingly, after receiving the screen projecting data from the terminal device, the server may forward the screen projecting data to the projection device. Therefore, after receiving the screen projecting data forwarded by the server, the projection device may display the screen projecting data, that is, display the current display page of the terminal device.

In the process of screen projecting, the projection device may send data to the terminal device through a communication connection. For example, when the user adjusts a volume, a playback progress of a video, a page or content in the page of the projection device through a channel (such as a remote controller of the projection device or an adjustment button of the projection device) other than the terminal device, the projection device may send adjustment information to the terminal device to synchronously adjust the terminal device, for example, synchronously adjust a volume, a playback progress of the projected video, the current display page or the content displayed in the current display page of the terminal device.

According to the screen projecting method provided in this embodiment, the screen projecting request carrying the target screen projecting identification information is received from the terminal device, where the target screen projecting identification information includes the target image information and/or the target video information; the projection device to which the screen projecting is requested by the terminal device is determined according to the target screen projecting identification information; and the screen projecting connection is established between the terminal device and the projection device. In this embodiment, with the preceding technical solution, when the wide area network-based screen projecting is performed, the image and/or the video are used as the screen projecting identifier for identifying the projection device so that more diverse manners for identifying the projection device can be provided and a risk of the screen projecting identification information being counterfeited or stolen can be reduced, thereby improving the security of screen projecting.

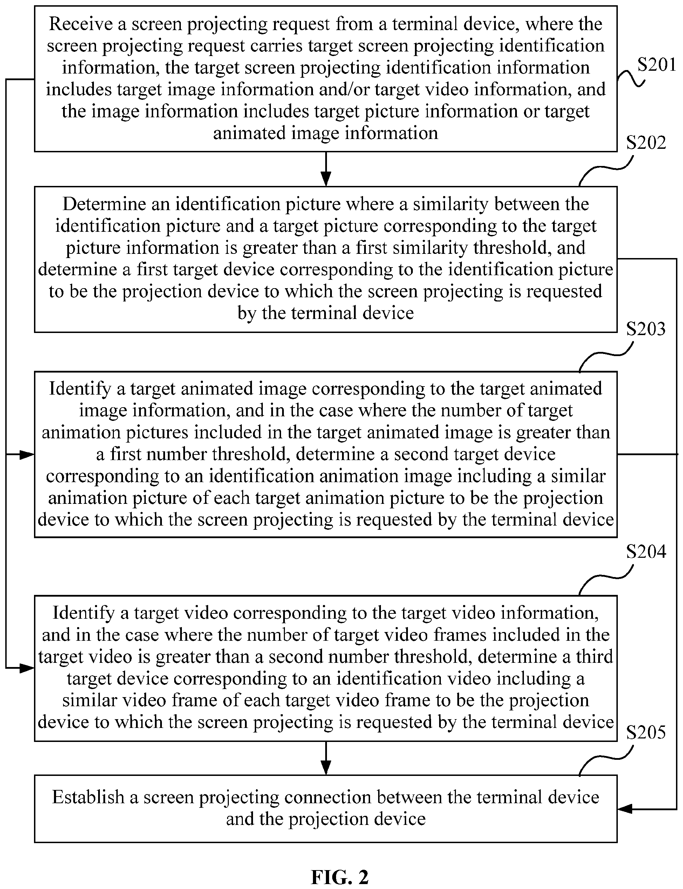

FIG. 2 is a flowchart of another screen projecting method according to an embodiment of the present disclosure. A solution in this embodiment may be combined with one or more optional solutions in the preceding embodiment. Optionally, the target screen projecting identification information includes the target image information, the target image information includes target picture information, and that the projection device to which the screen projecting is requested by the terminal device is determined according to the target screen projecting identification information includes: determining a first target device corresponding to an identification picture whose similarity to a target picture corresponding to the target picture information is greater than a first similarity threshold to be the projection device to which the screen projecting is requested by the terminal device.

Optionally, the target screen projecting identification information includes the target image information, the target image information includes target animated image information, and that the projection device to which the screen projecting is requested by the terminal device is determined according to the target screen projecting identification information includes: identifying a target animated image corresponding to the target animated image information, and in the case where the number of target animation pictures included in the target animated image is greater than a first number threshold, determining a second target device corresponding to an identification animation image including a similar animation picture of each target animation picture to be the projection device to which the screen projecting is requested by the terminal device, where the target animated image is recorded by the terminal device, and a similarity between the similar animation picture and the each target animation picture is greater than a second similarity threshold.

Optionally, the target screen projecting identification information includes the target video information, and that the projection device to which the screen projecting is requested by the terminal device is determined according to the target screen projecting identification information includes: identifying a target video corresponding to the target video information, and in the case where the number of target video frames included in the target video is greater than a second number threshold, determining a third target device corresponding to an identification video including a similar video frame of each target video frame to be the projection device to which the screen projecting is requested by the terminal device, where a similarity between the similar video frame and the each target video frame is greater than a third similarity threshold.

Accordingly, as shown in FIG. 2, the screen projecting method provided in this embodiment may include the steps below.

In S201, a screen projecting request is received from a terminal device, where the screen projecting request carries target screen projecting identification information, the target screen projecting identification information includes target image information and/or target video information, and the target image identifier includes target picture information or target animated image information. Then, S202, S203 or S204 is performed.

In S202, a first target device corresponding to an identification picture whose similarity to a target picture corresponding to the target picture information is greater than a first similarity threshold is determined to be a projection device to which screen projecting is requested by the terminal device. Then, S205 is performed.

The target picture information may be understood as picture information carried in the screen projecting request, such as color information of each pixel. Accordingly, the target picture may be a picture corresponding to the target picture information. The target picture may be captured by a user through the terminal device. The identification picture may be a picture used as a screen projecting identifier.

In this embodiment, when the target screen projecting identification information includes the target image information, that is, when the picture is used as the screen projecting identifier of the device, whether the target picture matches an identification picture of a device stored locally is determined according to a similarity between the target picture corresponding to the target image information and an identification picture of each device stored locally, and when a similarity between the target picture and an identification picture of a device stored locally is greater than the first similarity threshold, it is determined that the target picture successfully matches the identification picture of the device. Here, the first similarity threshold may be set as required, for example, may be set to 0.95 or 0.9.

For example, the projection device displays an identification picture of the projection device. The terminal device captures, through a camera, the identification picture displayed by the projection device to obtain the target picture, generates the screen projecting request including picture information (that is, the target picture information) of the target picture, and sends the screen projecting request to the server. Therefore, after receiving the screen projecting request, the server may acquire the target picture information in the screen projecting request and calculate a similarity between the target picture information and identification picture information of the identification picture of each device stored locally or calculate the similarity between the target picture corresponding to the target picture information and the identification picture of each device stored locally. If a similarity between the target picture information and a piece of identification picture information or a similarity between the target picture and an identification picture is greater than the first similarity threshold, a device (that is, the first target device) corresponding to the identification picture information/identification picture may be determined to be the projection device to which the screen projecting is requested by the terminal device.

In S203, a target animated image corresponding to the target animated image information is identified, and in the case where the number of target animation pictures included in the target animated image is greater than a first number threshold, a second target device corresponding to an identification animation image including a similar animation picture of each target animation picture is determined to be the projection device to which the screen projecting is requested by the terminal device. The target animated image is recorded by the terminal device, and a similarity between the similar animation picture and the each target animation picture is greater than a second similarity threshold. Then, S205 is performed.

The target animated image information may be understood as animated image information carried in the screen projecting request and may include picture information of multiple animation pictures. Accordingly, the target animated image may be an animated image corresponding to the target animated image information. The target animated image may be determined by being captured by the user through the terminal device. The target animation picture may be a picture included in the target animated image. The identification animation image may be an animated image used as the screen projecting identifier.

In this embodiment, when the target screen projecting identification information includes the target animated image information, that is, when the animated image is used as the screen projecting identifier of the device, the projection device to which the screen projecting is requested by the terminal device may be determined according to the number of animation pictures included in the target animated image corresponding to the target animated image information and a similarity between each animation picture and an animation picture in an identification animation image of each device stored locally. Here, the first number threshold and the second similarity threshold may be set as required. For example, the first number threshold may be set to 3 or 5, and the second similarity threshold may be set to 0.8 or 0.9.

For example, the projection device displays an identification animation image of the projection device. The terminal device captures, through the camera, the identification animation image displayed by the projection device to obtain a video including the identification animation image, determines the target animated image corresponding to the video in a manner such as video frame deduplication, generates the screen projecting request carrying the target animated image information of the target animated image, and sends the screen projecting request to the server. Accordingly, after receiving the screen projecting request, the server may determine the target animated image corresponding to the target animated image information. Alternatively, the projection device displays the identification animation image of the projection device. The terminal device captures, through the camera, the identification animation image displayed by the projection device to obtain a video including the identification animation image, generates the screen projecting request carrying video information (including the target animated image information) of the video, and sends the screen projecting request to the server. Accordingly, the server obtains, according to the video information carried in the screen projecting request, the video captured by the user and determines the target animated image corresponding to the video in a manner such as video frame deduplication.

Therefore, after determining the target animated image, the server may determine whether the number of target animation pictures included in the target animated image is greater than the first number threshold. If the number of target animation pictures included in the target animated image is not greater than the first number threshold, the server determines that the projection device to which the screen projecting is requested by the terminal device is not found. If the number of target animation pictures included in the target animated image is greater than the first number threshold, for each target animation picture, the server acquires, from the animation picture in the identification animation image of each device stored locally, an animation picture whose similarity to the target animation picture is greater than the second similarity threshold as the similar animation picture of the target animation picture. Moreover, the server determines a device (that is, the second target device) corresponding to the identification animation image including the similar animation picture of each target animation picture to be the projection device to which the screen projecting is requested by the terminal device. Alternatively, the server determines a device (that is, the second target device) corresponding to the identification animation image including the similar animation picture of each target animation picture to be the projection device to which the screen projecting is requested by the terminal device, where similar animation pictures are arranged in the same order as the target animation pictures, so as to improve the accuracy of the determined projection device.

In S204, a target video corresponding to the target video information is identified, and in the case where the number of target video frames included in the target video is greater than a second number threshold, a third target device corresponding to an identification video including a similar video frame of each target video frame is determined to be the projection device to which the screen projecting is requested by the terminal device, where a similarity between the similar video frame and the each target video frame is greater than a third similarity threshold.

The target video information may be understood as video information carried in the screen projecting request. Accordingly, the target video may be a video corresponding to the target video information. The target video may be captured by the user through the terminal device. The target video frame may be a video frame included in the target video. The identification video may be a video used as the screen projecting identifier.

In this embodiment, when the target screen projecting identification information includes the target video information, that is, when the video is used as the screen projecting identifier of the device, the projection device to which the screen projecting is requested by the terminal device may be determined according to the number of video frames included in the target video corresponding to the target video information and a similarity between each video frame and a video frame in an identification video of each device stored locally. Here, the second number threshold and the third similarity threshold may be set as required. For example, the second number threshold may be set to 15 or 20, and the second similarity threshold may be set to 0.8 or 0.9.

For example, the projection device plays an identification video of the projection device. The terminal device captures, through the camera, the identification video played by the projection device to obtain the target video, generates the screen projecting request carrying the target video information of the target video, and sends the screen projecting request to the server. Accordingly, after receiving the screen projecting request, the server may determine the target video corresponding to the target video information (for example, generate a video based on the target video information, perform processing such as video frame deduplication on the video, and use the processed video as the target video) and determine whether the number of target video frames included in the target video is greater than the second number threshold. If the number of target video frames included in the target video is not greater than the second number threshold, the server determines that the projection device to which the screen projecting is requested by the terminal device is not found. If the number of target video frames included in the target video is greater than the second number threshold, the server acquires the identification video including the target video and determines a device (that is, the third target device) corresponding to the identification video to be the projection device to which the screen projecting is requested by the terminal device. The identification video including the target video may be understood as an identification video including each target video frame of the target video (or an identification video including each target video frame of the target video, where the target video frames are arranged in the identification video in the same order as they are captured in the target video). For each target video frame, when an identification video includes the similar video frame whose similarity to the target video frame is greater than the third similarity threshold, it may be considered that the identification video includes the target video frame.

In an embodiment, the screen projecting identification information further includes target audio information. The screen projecting method provided in this embodiment further includes: determining a target device and a device corresponding to an identification audio whose similarity to a target audio corresponding to the target audio information is greater than a fourth similarity threshold to be the same device, where the target device includes the first target device, the second target device or the third target device.

The target audio information may be understood as audio information carried in the screen projecting request, which may be all audio information of the target audio or may include only text information corresponding to the target audio. Accordingly, the target audio may be an audio corresponding to the target picture information. The target audio may be recorded by the user through the terminal device. The identification audio may be an audio used as the screen projecting identifier.

In the preceding embodiment, the device may be identified for the screen projecting by multiple identification items, such as the picture and the audio, the animated image and the audio, or the video and the audio, so as to improve the security of screen projecting. In this case, the device corresponding to each identification item may be determined, and when the devices corresponding to the identification items are the same device, the device is determined to be the device to which the screen projecting is requested by the terminal device.

For example, the projection device displays the identification picture/identification animation image/identification video of the projection device and plays an identification audio of the projection device. The terminal device collects, in a recording manner, a video including the identification picture/identification animation image/identification video and the identification audio, generates the screen projecting request carrying video information of the video, and sends the screen projecting request to the server. Accordingly, the server determines the target picture/target animated image/target video and the target audio according to the video information carried in the screen projecting request, determines the first target device/second target device/third target device according to the target picture/target animated image/target video, calculates a similarity between the target audio and an identification audio of each device stored locally, determines the device corresponding to the identification audio whose similarity to the target audio is greater than the fourth similarity threshold, and determines whether the first target device/second target device/third target device and the device are the same device. If the first target device/second target device/third target device and the device are the same device, the server determines the device to be the projection device to which the screen projecting is requested by the terminal device. If the first target device/second target device/third target device and the device are not the same device, the serves determines that the projection device to which the screen projecting is requested by the terminal device is not found.

In S205, a screen projecting connection is established between the terminal device and the projection device.

According to the screen projecting method provided in this embodiment, the picture, the animated image or the video is used as the screen projecting identifier, and the projection device is identified based on the screen projecting identifier so that more diverse manners for identifying the projection device can be provided and a risk of screen projecting identification information being counterfeited or stolen can be reduced, thereby improving the security of screen projecting.

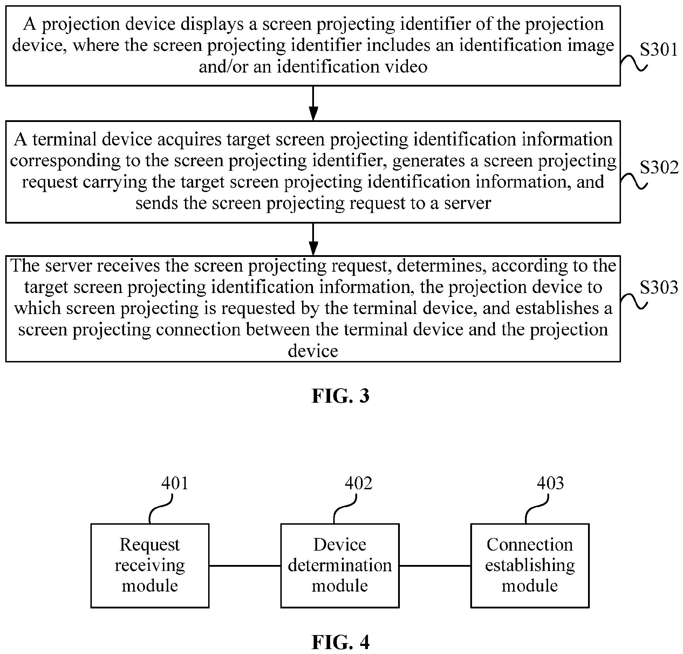

FIG. 3 is a flowchart of another screen projecting method according to an embodiment of the present disclosure. The screen projecting method is applicable to the scenario of wide area network-based screen projecting. As shown in FIG. 3, the screen projecting method provided in this embodiment may include the steps below.

In S301, a projection device displays a screen projecting identifier of the projection device, where the screen projecting identifier includes an identification image and/or an identification video.

In S302, a terminal device acquires target screen projecting identification information corresponding to the screen projecting identifier, generates a screen projecting request carrying the target screen projecting identification information, and sends the screen projecting request to a server.

In S303, the server receives the screen projecting request, determines, according to the target screen projecting identification information, the projection device to which screen projecting is requested by the terminal device, and establishes a screen projecting connection between the terminal device and the projection device.

According to the screen projecting method provided in this embodiment, the projection device displays the screen projecting identifier of the projection device, where the screen projecting identifier includes the identification image and/or the identification video; the terminal device collects the target screen projecting identification information corresponding to the screen projecting identifier, generates the screen projecting request carrying the target screen projecting identification information, and sends the screen projecting request to the server; and the server receives the screen projecting request, determines, according to the target screen projecting identification information carried in the screen projecting request, the projection device to which the screen projecting is requested by the terminal device, and establishes the screen projecting connection between the terminal device and the projection device. In this embodiment, with the preceding technical solution, more diverse manners for identifying the projection device can be provided and a risk of screen projecting identification information being counterfeited or stolen can be reduced, thereby improving the security of screen projecting.

FIG. 4 is a block diagram of a screen projecting apparatus according to an embodiment of the present disclosure. The apparatus may be implemented by software and/or hardware and may be configured in an electronic device such as a computer device (for example, a server). The apparatus may perform the screen projecting method to implement wide area network-based screen projecting between a terminal device and a projection device. As shown in FIG. 4, the screen projecting apparatus provided in this embodiment may include a request receiving module 401, a device determination module 402 and a connection establishing module 403. The request receiving module 401 is configured to receive a screen projecting request from the terminal device, where the screen projecting request carries target screen projecting identification information, and the target screen projecting identification information includes target image information and/or target video information. The device determination module 402 is configured to determine, according to the target screen projecting identification information, the projection device to which screen projecting is requested by the terminal device. The connection establishing module 403 is configured to establish a screen projecting connection between the terminal device and the projection device.

According to the screen projecting apparatus provided in this embodiment, the request receiving module receives the screen projecting request carrying the target screen projecting identification information from the terminal device, where the target screen projecting identification information includes the target image information and/or the target video information; the device determination module determines, according to the target screen projecting identification information, the projection device to which the screen projecting is requested by the terminal device; and the connection establishing module establishes the screen projecting connection between the terminal device and the projection device. In this embodiment, with the preceding technical solution, when the wide area network-based screen projecting is performed, an image and/or a video are used as a screen projecting identifier for identifying the projection device so that more diverse manners for identifying the projection device can be provided and a risk of screen projecting identification information being counterfeited or stolen can be reduced, thereby improving the security of screen projecting.

In the preceding solution, the target screen projecting identification information may include the target image information, the target image information may include target picture information, and the device determination module 402 may be configured to determine a first target device corresponding to an identification picture whose similarity to a target picture corresponding to the target picture information is greater than a first similarity threshold to be the projection device to which the screen projecting is requested by the terminal device.

In the preceding solution, the target screen projecting identification information may include the target image information, the target image information may include target animated image information, and the device determination module 402 may be configured to identify a target animated image corresponding to the target animated image information, and in the case where the number of target animation pictures included in the target animated image is greater than a first number threshold, determine a second target device corresponding to an identification animation image including a similar animation picture of each target animation picture to be the projection device to which the screen projecting is requested by the terminal device, where the target animated image is recorded by the terminal device, and a similarity between the similar animation picture and the each target animation picture is greater than a second similarity threshold.

In the preceding solution, the target screen projecting identification information may include the target video information, and the device determination module 402 may be configured to identify a target video corresponding to the target video information, and in the case where the number of target video frames included in the target video is greater than a second number threshold, determine a third target device corresponding to an identification video including a similar video frame of each target video frame to be the projection device to which the screen projecting is requested by the terminal device, where a similarity between the similar video frame and the each target video frame is greater than a third similarity threshold.

In the preceding solution, the screen projecting identification information may further include target audio information, and the device determination module 402 may be further configured to determine a target device and a device corresponding to an identification audio whose similarity to a target audio corresponding to the target audio information is greater than a fourth similarity threshold to be the same device, where the target device includes the first target device, the second target device or the third target device.

The screen projecting method provided in this embodiment may further include an identifier determination module. Before the screen projecting request is received from the terminal device, the identifier determination module is configured to, in the case where an identification information acquisition request is received from the projection device, determine screen projecting identification information of the projection device and send the screen projecting identification information to the projection device for display so that the terminal device acquires the screen projecting identification information.

After the screen projecting connection is established between the terminal device and the projection device, a data acquisition module is configured to acquire screen projecting data of the terminal device after the screen mirroring connection is established between the terminal device and the mirror device, and to send the screen projecting data to the projection device for display.

The screen projecting apparatus provided in the embodiment of the present disclosure may perform the screen projecting method provided in any embodiment of the present disclosure and has function modules and effects corresponding to the screen projecting method performed. For technical details not described in detail in this embodiment, reference may be made to the screen projecting method provided in any embodiment of the present disclosure.

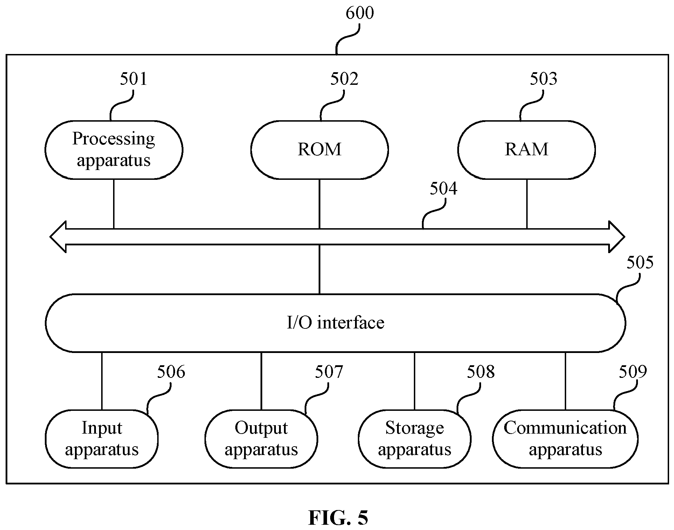

FIG. 5 shows a structure diagram of an electronic device (such as a server) 500 suitable for implementing an embodiment of the present disclosure. The electronic device 500 in the embodiment of the present disclosure may include, but is not limited to, a mobile terminal such as a mobile phone, a laptop, a digital broadcast receiver, a personal digital assistant (PDA), a portable android device (PAD), a portable media player (PMP) and an in-vehicle terminal (such as an in-vehicle navigation terminal) and a stationary terminal such as a digital television (TV) and a desktop computer. The electronic device 500 shown in FIG. 5 is merely an example and is not intended to limit the function and use scope of embodiments of the present disclosure.

As shown in FIG. 5, the electronic device 500 may include a processing apparatus (such as a central processing unit or a graphics processing unit) 501. The processing apparatus 501 may perform various appropriate actions and processing according to a program stored in a read-only memory (ROM) 502 or a program loaded into a random-access memory (RAM) 503 from a storage apparatus 508. Various programs and data required for the operation of the electronic device 500 may also be stored in the RAM 503. The processing apparatus 501, the ROM 502 and the RAM 503 are connected to each other through a bus 504. An input/output (I/O) interface 505 is also connected to the bus 504.

Generally, the following apparatuses may be connected to the I/O interface 505: an input apparatus 506 such as a touch screen, a touchpad, a keyboard, a mouse, a camera, a microphone, an accelerometer and a gyroscope; an output apparatus 507 such as a liquid crystal display (LCD), a speaker and a vibrator; the storage apparatus 508 such as a magnetic tape and a hard disk; and a communication apparatus 509. The communication apparatus 509 may allow the electronic device 500 to perform wireless or wired communication with other devices to exchange data. Although FIG. 5 shows the electronic device 500 having various apparatuses, it is not required to implement or include all the apparatuses shown. Alternatively, more or fewer apparatuses may be implemented or included.

According to an embodiment of the present disclosure, the process described above with reference to flowcharts may be implemented as a computer software program. For example, a computer program product is included in the embodiment of the present disclosure. The computer program product includes a computer program carried on a non-transitory computer-readable medium. The computer program includes program codes for performing the methods shown in the flowcharts. In such embodiments, the computer program may be downloaded and installed from a network through the communication apparatus 509, installed from the storage apparatus 508 or installed from the ROM 502. When the computer program is executed by the processing apparatus 501, the preceding functions defined in the methods in the embodiments of the present disclosure are performed.

The preceding computer-readable medium of the present disclosure may be a computer-readable signal medium or a computer-readable storage medium or any combination thereof. For example, the computer-readable storage medium may be, but is not limited to, an electrical, magnetic, optical, electromagnetic, infrared or semiconductor system, apparatus or device or any combination thereof. Examples of the computer-readable storage medium may include, but are not limited to, an electrical connection with one or more wires, a portable computer disk, a hard disk, a RAM, a ROM, an erasable programmable read-only memory (EPROM), a flash memory, an optical fiber, a portable compact disc read-only memory (CD-ROM), an optical storage device, a magnetic storage device or any appropriate combination thereof. In the present disclosure, the computer-readable storage medium may be any tangible medium including or storing a program that can be used by or in connection with an instruction execution system, apparatus or device. In the present disclosure, the computer-readable signal medium may include a data signal propagated on a baseband or as part of a carrier, where computer-readable program codes are carried in the data signal. The data signal propagated in this manner may be in multiple forms and includes, but is not limited to, an electromagnetic signal, an optical signal or any appropriate combination thereof. The computer-readable signal medium may also be any computer-readable medium except the computer-readable storage medium. The computer-readable signal medium may send, propagate or transmit a program used by or in connection with an instruction execution system, apparatus or device. Program codes included on the computer-readable medium may be transmitted by any appropriate medium, including, but not limited to, a wire, an optical cable, a radio frequency (RF) or any appropriate combination thereof.

In some embodiments, clients and servers can communicate using any network protocol currently known or developed in the future, such as an HTTP, and may be interconnected via any form or medium of digital data communication (for example, a communication network). Examples of the communication network include a local area network (LAN), a wide area network (WAN), an inter-network (for example, the Internet), a peer-to-peer network (for example, an ad hoc network) and any network currently known or developed in the future.

The preceding computer-readable medium may be included in the preceding electronic device or may exist alone without being assembled into the electronic device.

The preceding computer-readable medium carries one or more programs. When executed by the electronic device, the one or more programs cause the electronic device to: receive a screen projecting request from a terminal device, where the screen projecting request carries target screen projecting identification information, and the target screen projecting identification information includes target image information and/or target video information; determine, according to the target screen projecting identification information, a projection device to which screen projecting is requested by the terminal device; and establish a screen projecting connection between the terminal device and the projection device.

Computer program codes for executing operations in the present disclosure may be written in one or more programming languages or a combination thereof. The preceding programming languages include, but are not limited to, an object-oriented programming language such as Java, Smalltalk or C++ and may also include a conventional procedural programming language such as C or a similar programming language. The program codes may be executed entirely on a user computer, executed partly on a user computer, executed as a stand-alone software package, executed partly on a user computer and partly on a remote computer or executed entirely on a remote computer or a server. In the case where the remote computer is involved, the remote computer may be connected to the user computer through any type of network including a LAN or a WAN or may be connected to an external computer (for example, through the Internet provided by an Internet service provider).

Flowcharts and block diagrams among the drawings illustrate the architecture, functionality and operation of possible implementations of systems, methods and computer program products according to various embodiments of the present disclosure. In this regard, each block in the flowcharts or the block diagrams may represent a module, program segment or part of codes, where the module, program segment or part of codes includes one or more executable instructions for implementing specified logical functions. It is to be noted that in some alternative implementations, the functions marked in the blocks may occur in an order different from that marked in the drawings. For example, two successive blocks may, in practice, be executed substantially in parallel or executed in a reverse order, which depends on the functions involved. It is also to be noted that each block in the block diagrams and/or the flowcharts and a combination of blocks in the block diagrams and/or the flowcharts may be implemented by a special-purpose hardware-based system performing specified functions or operations or may be implemented by a combination of special-purpose hardware and computer instructions.

The units involved in the embodiments of the present disclosure may be implemented by software or hardware. The name of a module is not intended to limit the unit in a certain circumstance.

The functions described above herein may be performed at least in part by one or more hardware logic components. For example, without limitation, example types of hardware logic components that can be used include a field-programmable gate array (FPGA), an application-specific integrated circuit (ASIC), an application-specific standard product (ASSP), a system-on-chip (SoC), a complex programmable logic device (CPLD) and the like.

In the context of the present disclosure, a machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device or any appropriate combination thereof. Examples of the machine-readable storage medium include an electrical connection based on one or more wires, a portable computer disk, a hard disk, a RAM, a ROM, an EPROM, a flash memory, an optical fiber, a CD-ROM, an optical storage device, a magnetic storage device or any appropriate combination thereof.

According to one or more embodiments of the present disclosure, example one provides a screen projecting method. The method includes the steps below.

A screen projecting request is received from a terminal device, where the screen projecting request carries target screen projecting identification information, and the target screen projecting identification information includes target image information and/or target video information.

A projection device to which screen projecting is requested by the terminal device is determined according to the target screen projecting identification information.

A screen projecting connection is established between the terminal device and the projection device.

According to one or more embodiments of the present disclosure, in example two, according to the method of example one, the target screen projecting identification information includes the target image information, the target image information includes target picture information, and that the projection device to which the screen projecting is requested by the terminal device is determined according to the target screen projecting identification information includes the step below.

A first target device corresponding to an identification picture whose similarity to a target picture corresponding to the target picture information is greater than a first similarity threshold is determined to be the projection device to which the screen projecting is requested by the terminal device.

According to one or more embodiments of the present disclosure, in example three, according to the method of example one, the target screen projecting identification information includes the target image information, the target image information includes target animated image information, and that the projection device to which the screen projecting is requested by the terminal device is determined according to the target screen projecting identification information includes the step below.

A target animated image corresponding to the target animated image information is identified, and in the case where the number of target animation pictures included in the target animated image is greater than a first number threshold, a second target device corresponding to an identification animation image including a similar animation picture of each target animation picture is determined to be the projection device to which the screen projecting is requested by the terminal device, where the target animated image is recorded by the terminal device, and a similarity between the similar animation picture and the each target animation picture is greater than a second similarity threshold.

According to one or more embodiments of the present disclosure, in example four, according to the method of example one, the target screen projecting identification information includes the target video information, and that the projection device to which the screen projecting is requested by the terminal device is determined according to the target screen projecting identification information includes the step below.

A target video corresponding to the target video information is identified, and in the case where the number of target video frames included in the target video is greater than a second number threshold, a third target device corresponding to an identification video including a similar video frame of each target video frame is determined to be the projection device to which the screen projecting is requested by the terminal device, where a similarity between the similar video frame and the each target video frame is greater than a third similarity threshold.

According to one or more embodiments of the present disclosure, in example five, according to the method of any one of examples two to four, the screen projecting identification information further includes target audio information, and that the projection device to which the screen projecting is requested by the terminal device is determined according to the target screen projecting identification information further includes the step below.

A target device and a device corresponding to an identification audio whose similarity to a target audio corresponding to the target audio information is greater than a fourth similarity threshold are determined to be the same device, where the target device includes the first target device, the second target device or the third target device.

According to one or more embodiments of the present disclosure, in example six, according to the method of any one of examples one to four, before the screen projecting request is received from the terminal device, the method further includes the step below.

In the case where an identification information acquisition request is received from a projection device, screen projecting identification information of the projection device is determined, and the screen projecting identification information is sent to the projection device for display so that the terminal device acquires the screen projecting identification information.

According to one or more embodiments of the present disclosure, in example seven, according to the method of any one of examples one to four, after the screen projecting connection is established between the terminal device and the projection device, the method further includes the step below.

Screen projecting data of the terminal device is acquired, and the screen projecting data is sent to the projection device for display.

According to one or more embodiments of the present disclosure, example eight provides a screen projecting method. The method includes the steps below.

A projection device displays a screen projecting identifier of the projection device, where the screen projecting identifier includes an identification image and/or an identification video.

A terminal device acquires target screen projecting identification information corresponding to the screen projecting identifier, generates a screen projecting request carrying the target screen projecting identification information, and sends the screen projecting request to a server.

The server receives the screen projecting request, determines, according to the target screen projecting identification information, the projection device to which screen projecting is requested by the terminal device, and establishes a screen projecting connection between the terminal device and the projection device.

According to one or more embodiments of the present disclosure, example nine provides a screen projecting apparatus. The apparatus includes a request receiving module, a device determination module and a connection establishing module.

The request receiving module is configured to receive a screen projecting request from a terminal device, where the screen projecting request carries target screen projecting identification information, and the target screen projecting identification information includes target image information and/or target video information.

The device determination module is configured to determine, according to the target screen projecting identification information, a projection device to which screen projecting is requested by the terminal device.

The connection establishing module is configured to establish a screen projecting connection between the terminal device and the projection device.

According to one or more embodiments of the present disclosure, example ten provides an electronic device.

The electronic device includes one or more processors and a memory configured to store one or more programs.

When executed by the one or more processors, the one or more programs cause the one or more processors to perform the screen projecting method of any one of examples one to eight.

According to one or more embodiments of the present disclosure, example eleven provides a computer-readable storage medium. The storage medium stores a computer program which, when executed by a processor, causes the processor to perform the screen projecting method of any one of examples one to eight.

Additionally, although multiple operations are described in a particular order, it is not a must to perform these operations in this particular order or in sequential order. In a certain environment, multitasking and parallel processing may be advantageous. Similarly, although multiple implementation details are included in the preceding discussion, these should not be construed as limiting the scope of the present disclosure. Some features described in the context of separate embodiments may be implemented in combination in a single embodiment. Rather, features described in the context of a single embodiment may be implemented in multiple embodiments individually or in any suitable subcombination.

## Claims

1. A screen projecting method, comprising:
receiving a screen projecting request from a terminal device, wherein the screen projecting request carries target screen projecting identification information, and the target screen projecting identification information comprises at least one of target image information or target video information;
determining, according to the target screen projecting identification information, a projection device to which screen projecting is requested by the terminal device; and
establishing a screen projecting connection between the terminal device and the projection device.

2. The method of claim 1, wherein the target screen projecting identification information comprises the target image information, the target image information comprises target picture information, and determining, according to the target screen projecting identification information, the projection device to which the screen projecting is requested by the terminal device comprises:
determining an identification picture where a similarity between the identification picture and a target picture corresponding to the target picture information is greater than a first similarity threshold, and determining a first target device corresponding to the identification picture to be the projection device to which the screen projecting is requested by the terminal device.

3. The method of claim 1, wherein the target screen projecting identification information comprises the target image information, the target image information comprises target animated image information, and determining, according to the target screen projecting identification information, the projection device to which the screen projecting is requested by the terminal device comprises:
identifying a target animated image corresponding to the target animated image information, and in a case where a number of target animation pictures comprised in the target animated image is greater than a first number threshold, determining a second target device corresponding to an identification animation image comprising a similar animation picture of each target animation picture to be the projection device to which the screen projecting is requested by the terminal device, wherein the target animated image is recorded by the terminal device, and a similarity between the similar animation picture and the each target animation picture is greater than a second similarity threshold.

4. The method of claim 1, wherein the target screen projecting identification information comprises the target video information, and determining, according to the target screen projecting identification information, the projection device to which the screen projecting is requested by the terminal device comprises:
identifying a target video corresponding to the target video information, and in a case where a number of target video frames comprised in the target video is greater than a second number threshold, determining a third target device corresponding to an identification video comprising a similar video frame of each target video frame to be the projection device to which the screen projecting is requested by the terminal device, wherein a similarity between the similar video frame and the each target video frame is greater than a third similarity threshold.

5. The method of any one of claims 2 to 4, wherein the screen projecting identification information further comprises target audio information, and determining, according to the screen projecting identification information, the projection device to which the screen projecting is requested by the terminal device further comprises:
determining a target device and a device corresponding to an identification audio where a similarity between the identification audio and a target audio corresponding to the target audio information is greater than a fourth similarity threshold, and determining a target device and a device corresponding to the identification audio to be a same device, wherein the target device comprises the first target device, the second target device or the third target device.

6. The method of any one of claims 1 to 4, before receiving the screen projecting request from the terminal device, further comprising:
in a case where an identification information acquisition request is received from the projection device, determining screen projecting identification information of the projection device, and sending the screen projecting identification information to the projection device for display so that the terminal device acquires the screen projecting identification information.

7. The method of any one of claims 1 to 4, after establishing the screen projecting connection between the terminal device and the projection device, further comprising:
acquiring screen projecting data of the terminal device, and sending the screen projecting data to the projection device for display.

8. A screen projecting method, comprising:
displaying, by a projection device, a screen projecting identifier of the projection device, wherein the screen projecting identifier comprises at least one of an identification image or an identification video;
acquiring, by a terminal device, target screen projecting identification information corresponding to the screen projecting identifier, generating a screen projecting request carrying the target screen projecting identification information, and sending the screen projecting request to a server; and
receiving, by the server, the screen projecting request, determining, according to the target screen projecting identification information, the projection device to which screen projecting is requested by the terminal device, and establishing a screen projecting connection between the terminal device and the projection device.

9. A screen projecting apparatus, comprising:
a request receiving module, which is configured to receive a screen projecting request from a terminal device, wherein the screen projecting request carries target screen projecting identification information, and the target screen projecting identification information comprises at least one of target image information or target video information;
a device determination module, which is configured to determine, according to the target screen projecting identification information, a projection device to which screen projecting is requested by the terminal device; and
a connection establishing module, which is configured to establish a screen projecting connection between the terminal device and the projection device.

10. An electronic device, comprising:
at least one processor; and
a memory configured to store at least one program;
wherein the at least one program, when executed by the at least one processor, causes the at least one processor to perform the screen projecting method of any one of claims 1 to 8.

11. A computer-readable storage medium, which is configured to store a computer program which, when executed by a processor, causes the processor to perform the screen projecting method of any one of claims 1 to 8.
